# EUROPEAN PATENT SPECIFICATION

(11) **EP 3 354 447 B1**
(45) Date of publication and mention of the grant of the patent: **09.03.2022**
(21) Application number: 17194550.4
(22) Date of filing: 03.10.2017
(51) Int. Cl.: B29C 70/30, G01N 21/84

(54) **METHODS FOR CREATING A WRINKLE REFERENCE STANDARD FOR USE IN INSPECTING COMPOSITE STRUCTURES**
VERFAHREN ZUR ERZEUGUNG EINES FALTENREFERENZSTANDARDS ZUR VERWENDUNG BEI DER PRÜFUNG VON VERBUNDSTRUKTUREN
PROCÉDÉS DE CRÉATION D'UNE NORME DE RÉFÉRENCE DE RIDE À UTILISER DANS L'INSPECTION DE STRUCTURES COMPOSITES

(30) Priority: 20.12.2016 US 201615384617
(43) Date of publication of application: 01.08.2018
(73) Proprietor: The Boeing Company, Chicago, IL 60606-1596 (US)
(72) Inventor: FIENI, Sadie Lee, Chicago, DE 60606-1596 (US); KENNEDY, James C., Chicago, IL 60606-1596 (US); OFFUTT, Jessica, Chicago, IL 60606-1596 (US); JOHNSON, Daniel, Chicago, IL 60606-1596 (US); PETERSON, Kristofer Logan, Chicago, IL 60606-1596 (US)
(74) Representative: Duxbury, Stephen

(56) References cited:
- P. HALLANDER ET AL.: "An experimental study of mechanisms behind wrinkle development during forming of composite laminates", COMPOSITES: PART A, 26 March 2013 (2013-03-26), pages 54-64, XP002781633, Retrieved from the Internet: URL:HTTP://DX.DOI.ORG/10.1016/J.COMPOSITES A.2013.03.013 [retrieved on 2018-06-04]
- SUPRATIK MUKHOPADHYAY ET AL.: "Tensile failure of laminates contaning an embedded wrinkle; numerical and experimental study", COMPOSITES: PART A, PART A 7, 21 July 2015 (2015-07-21), pages 219-228, XP002781634, Retrieved from the Internet: URL:HTTP://DX.DOI.ORG/10.1016/J.COMPOSITES A.2015.07.007 [retrieved on 2018-06-01]
- ANDREW MAKEEV ET AL.: "Manufacturing Issues and Measurement Techniques for Assessment of the Effects on Structural Performance of Composite Parts", AMERICAN HELICOPTER SOCIETY 66TH ANNUAL FORUM, 11 May 2010 (2010-05-11), - 13 May 2010 (2010-05-13), XP002781635, Phoenix AZ

## Description

### TECHNOLOGICAL FIELD

The present disclosure generally relates to the field of composite assemblies and components. More particularly, the present disclosure relates to the field of inspecting and maintaining composite assemblies and components, including the manufacture and use of inspection reference standards for non-invasively inspecting and maintaining composite components and composite assemblies.

### BACKGROUND

Composite materials, including aerospace-grade composite materials, often comprise layers of composite material including, for example and without limitation, impregnated composite materials, or prepregs that, in turn, comprise resins or blends of resin-containing compounds, including epoxy monomers including, without limitation, multifunctional epoxy monomer(s) and a bi-functional amine monomer(s). The composite layers must be cured to achieve a useable finished composite material.

In the manufacture of various composite components, parts and assemblies, irregularities or anomalies may, either intentionally or unintentionally, be introduced to the components and parts. For the purpose of this disclosure, the terms "components" and "parts" are equivalent terms and may be used interchangeably. Further, for the purpose of this disclosure, the terms "irregularities" and "anomalies" are equivalent terms and may be used interchangeably. Such irregularities are often non-planar areas that physically deviate from the plane of a layer of composite material. Often, the irregularities inadvertently occur or are intentionally introduced to non-surface (e.g. sub-surface) areas of the composite components. In other words, irregularities may occur naturally (e.g. due to wrinkling) or be intentionally introduced at sub-surface regions of the composite components. Depending on the requirements and acceptable tolerances of the composite parts, such non-planar, irregular regions may exceed a particular inspection parameter for a component. In such instances the components will fail an inspection and are discarded. However, components may have an acceptable level or degree, or even a desired level or degree of non-planarity in sub-surface regions of the component, in which case, the part will pass an inspection.

Inspection methods for composite components that require the physical inspection of a cross-section of a composite component will often necessarily result in the destruction of the usefulness of the composite component. Therefore, a non-destructive method of inspecting a composite component to determine the presence and degree of non-planar characteristics of sub-surface regions of a composite component (including, e.g. the presence and degree of wrinkles), would be advantageous.

The scientific article, by P. Hallander et al., titled "An experimental study of mechanisms behind wrinkle development during forming of composite laminates, in Composites: Part A, 26 March 2013, pages 54-64, discloses an experimental study with pre-stacked unidirectional prepreg on a forming tool with varying cross section, wherein experimental evaluation is performed on the out-of-plane defect height, type, location and number. The study shows that compression is to some degree always developed during forming of a recess area but that the lay-up sequence has a dominant effect on the wrinkling development.

### BRIEF SUMMARY

The present disclosure relates to methods, systems and apparatuses for the non-destructive inspection of composite components and composite assemblies. The present disclosure also relates to the manufacture and use of inspection reference standards. Such reference standards can be used to determine the profile of sub-surface anomalies (e.g. wrinkles, etc.), including non-planar anomalies occurring in a composite component or assembly.

According to an aspect of the disclosure, a method is disclosed for manufacturing an inspection reference standard comprising positioning a tool, with the tool comprising a tool first surface, and with the tool first surface comprising a non-planar characteristic; applying a first charge to the tool first surface; at least partially curing the first charge, with the first charge comprising a first charge first surface and a first charge second surface, and with the first charge first surface positioned proximate to the tool first surface; applying a second charge to the first charge first surface; and at least partially curing the second charge.

According to a further aspect, after the step of at least partially curing the first charge, the method further comprises imparting a predetermined non-planar characteristic from the tool first surface to the first charge first surface.

In a further aspect, after applying a second charge to the first charge first surface, a predetermined non-planar characteristic from the first charge first surface is imparted to the second charge.

In yet another aspect, an inspection reference standard is made according to a method comprising positioning a tool, said tool comprising a tool first surface, with the tool first surface comprising a non-planar characteristic; applying a first charge to the tool first surface; at least partially curing the first charge, with the first charge comprising a first charge first surface and a first charge second surface, and with the first charge first surface positioned proximate to the tool first surface; applying a second charge to the first charge first surface; and at least partially curing the second charge, wherein the inspection reference standard is configured to calibrate a wrinkle measurement system.

According to a further aspect, in the step of positioning a tool, with the tool comprising a tool first surface, and with the tool first surface comprising a predetermined non-planar characteristic, the non-planar characteristic comprises a predetermined configuration.

In yet another aspect, in the step of contacting the tool first surface with a first charge, the first charge comprises a composite material.

In a further aspect, in the step of contacting a second charge to the first charge first surface, the second charge comprises a composite material.

In a still further aspect, after the step of imparting predetermined non-planar characteristic from the tool first surface to the first charge first surface, a method further comprises removing the first charge from the tool.

In a further aspect, before the step of positioning a tool, with the tool comprising a first tool surface, and with the tool first surface comprising a predetermined non-planar characteristic, a method further comprises imparting a predetermined non-planar characteristic onto a tool first surface.

In yet another aspect, in the step of at least partially curing the first charge, the first charge is substantially fully cured.

In still another aspect, in the step of at least partially curing the second charge, the second charge is substantially fully cured.

In another aspect, in the step of contacting the tool first surface with the first charge, the first charge comprises a prepreg material.

In another aspect, in the step of contacting the tool first surface with the first charge, the prepreg material comprises a plurality of prepreg layers.

In yet another aspect, in the step of applying a second charge to the first charge first surface, the second charge comprises a prepreg material.

In still another aspect, in the step of applying a second charge to the first charge first surface, the second charge comprises a plurality of prepreg layers.

In still another aspect, before the step of applying a second charge to the first charge first surface, a method further comprises treating the first charge first surface.

In another aspect, the step of treating the first charge first surface comprises removing a predetermined amount of material from the first charge first surface.

In yet another aspect, the step of removing a layer of material from the first charge first surface comprises removing a layer of material ranging from about 10 µm to about 100 µm.

A still further aspect is directed to a reference standard comprising a first charge, with the first charge at least partially cured, and with the first charge having a first charge first surface and a first charge second surface, with a second charge positioned proximate to the first charge first surface, and with the second charge at least partially cured, and wherein the first charge first surface comprises a predetermined non-planar characteristic.

In yet another aspect, the second charge is configured to be at least partially cured to the first charge first surface.

In a still further aspect, the reference standard is used to calibrate a wrinkle measurement system.

In a still further system, the reference standard is used to calibrate a wrinkle measurement system for evaluating composite parts.

In another aspect, the reference standard is used to calibrate a wrinkle measurement system for evaluating composite parts, with such parts used to fabricate a structure.

In a further aspect, the structure may be a stationary structure.

In a further aspect, the stationary structure comprises a building, a generator, a wind turbine, etc.

In another aspect, the stationary structure comprises a moving component, such as generator, wind turbine, etc.

In yet another aspect, the structure may be a vehicle.

In a still further aspect, the vehicle may be a manned aircraft, an unmanned aircraft, a manned spacecraft, an unmanned spacecraft, a manned rotorcraft, an unmanned rotorcraft, a manned satellite, an unmanned satellite, a rocket, a manned terrestrial vehicle, an unmanned terrestrial vehicle, a manned surface and/or sub-surface water borne vehicle, an unmanned surface and/or sub-surface water borne vehicle and combinations thereof.

A still further aspect is directed to a wrinkle reference standard made according to a method comprising positioning a tool, said tool comprising a tool first surface, with the tool first surface comprising a non-planar area; applying a first charge to the tool first surface; at least partially curing the first charge, with the first charge comprising a first charge first surface and a first charge second surface, and with the first charge first surface positioned proximate to the tool first surface; applying a second charge to the first charge first surface; and at least partially curing the second charge, wherein the reference standard is used to calibrate a wrinkle measurement system.

### BRIEF DESCRIPTION OF THE DRAWINGS

Having thus described variations of the disclosure in general terms, reference will now be made to the accompanying drawings, which are not necessarily drawn to scale, and wherein:
FIG. 1 is a representative drawing of an photo micrograph showing a cross-sectional view of a composite structure comprising a wrinkle;
FIG. 2 is a representative CAD drawing of a side view of a dimension to be machined into a tool;
FIG. 3 is a perspective elevated view of a tool used to manufacture composite components showing predetermined surface features;
FIG. 4 is a perspective elevated view of a tool used to manufacture composite components shown in FIG. 3 having predetermined surface features treated;
FIG. 5 is a side view of a first charge of composite material positioned proximate to the tool shown in FIGs. 3 and 4;
FIG. 6 is a side view of the charge composite material shown in FIG. 5 now cured and a second charge of composite material positioned proximate to the cured first charge of composite material;
FIG. 7A is a photo micrograph of a cross-section of a composite structure;
FIG. 7B is an ultrasonic scan of a cross-section of a composite structure; and
FIG. 8 is a flowchart outlining a method according to an aspect of the present disclosure.

### DETAILED DESCRIPTION

Aspects of the present disclosure are directed to methods, systems and apparatuses for the non-destructive inspection of composite components and composite assemblies. The present disclosure also relates to the manufacture and use of inspection reference standards. Such standards can be used to determine the profile of sub-surface anomalies (e.g. wrinkles), including non-planar anomalies occurring in a composite component or assembly.

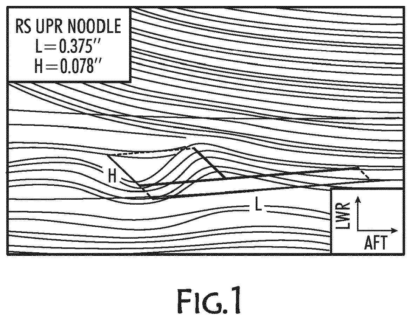

FIG. 1 is a representative cross-sectional view of a photo micrograph of a composite structure showing an internal region comprising a non-planar irregularity, e.g. a wrinkle. As shown in FIG. 1, composite layers are shown as discrete lines. As the composite is set up, for example on a tool, anomalies or irregularities, including wrinkles, may be introduced to the composite either intentionally or inadvertently. In certain circumstances, the presence of anomalies such as wrinkles may result in a composite component failing inspection. In other circumstances, predetermined anomalies, including wrinkles are intentionally introduced according to a particular composite component's end use function where the presence of the wrinkle advantageously affects a component's performance. In other situations, while the presence of an anomaly within the composite component is not desired, an anomaly, such as a wrinkle, may not result in a composite component's failure if the anomaly is within certain accepted tolerances. Therefore, reference standards have been employed as inspection tools such that the reference standard contains an acceptable level of predetermined anomaly. When comparing the topological characteristics of the reference standard to a composite component during inspection, such as an ultrasonic inspection (or other non-destructive inspection regimen), so long as the composite component being inspected contains an anomaly that is within predetermined values (as compared to the reference standard, the composite component may pass inspection, and be retained and used (rather than discarded as scrap).

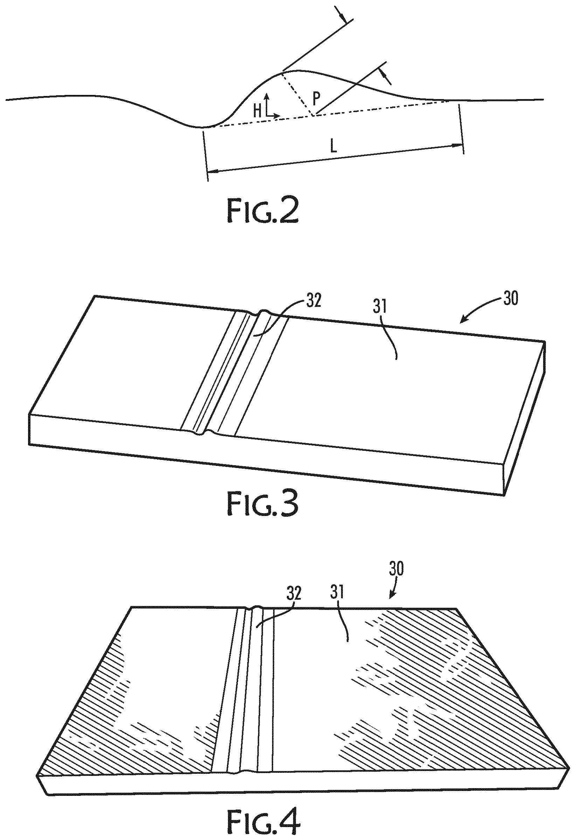

FIG. 2 is a representative CAD drawing of a side view of a dimension to be machined into a tool showing an anomaly being. The dimension shown relates to a predetermined anomaly that can be introduced to a tool surface intentionally. The arrows indicate length (I), height (h), pitch (p) variables that can be designed to achieve a desired, predetermined non-planar feature into a structure, such as a tool that can be used to manufacture reference standards according to aspects of the present disclosure. According to an aspect of the present disclosure, to create a desired surface profile, an image is traced into a CAD program to closely approximate a photo micrograph of a material having a known wrinkle (for example, the photo micrograph shown in FIG. 1).

FIG. 3 is a perspective elevated view of a tool 30 used to manufacture composite components. The tool 30 has a tool first surface 31 showing predetermined surface features 32. Such a tool may be made from any desirable material including, without limitation, a metal or other material, such as a high density plastic or polymeric material that can withstand composite processing conditions such as elevated temperature and pressures, as would be readily understood by one skilled in the field of composite manufacture. Particularly suitable tool materials include, without limitation aluminum, and aluminum alloys including, without limitation aluminum alloys 6061, BMS8-276, etc.

FIG. 4 is a perspective elevated view of the tool 30 used to manufacture composite components shown in FIG. 3 having a region of predetermined surface features 32 (on the tool first surface 31) that have been treated or machined to achieve desired and predetermined characteristics on the tool surface.

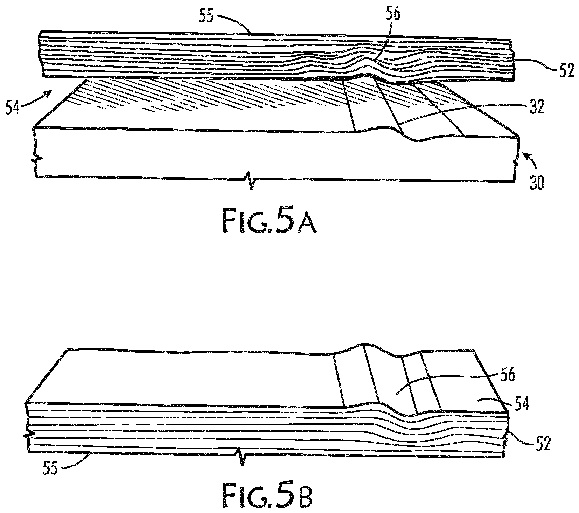

FIG. 5A is a side view of a first charge of at least partially cured composite material 52 positioned proximate to the tool 30 shown in FIGs. 3 and 4. Tool 30 comprises a region of predetermined surface features 32. During processing, (not shown) the first charge of composite material 52 is brought into contact with the tool 30, with the region of predetermined surface features 32 (as shown the surface features are non-planar) of the tool 30 transferred, at least in part, to the first charge of composite material. The first charge has a first charge first surface 54 and a first charge second surface 55. The surface features 32 on tool 30 cause a non-planar characteristic 56 (e.g. non-planar deformation) of the first charge first surface 54. In a predetermined fashion, the deformation can cause a progressive non-planar characteristic 56 at a region of the first charge first surface 54. FIG. 5A shows the at least partially cured first charge of composite material 52 being separated from, and removed from tool 30.

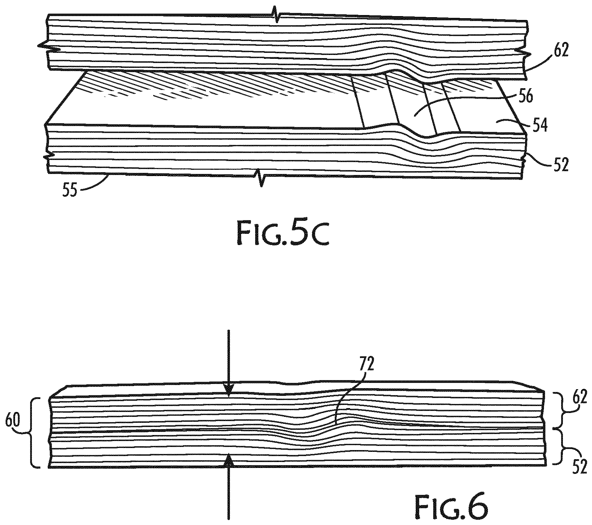

As shown in FIG. 5B, the at least partially cured charge 52 comprises a first surface 54 and a first charge second surface 55. The first charge first surface 54 comprises a predetermined first surface characteristic 56 that are substantially coincident in matching dimension with the region of predetermined surface features 32 found on the surface of tool 30. The predetermined first surface characteristic is understood to extend over a surface and even a sub-surface region of the first surface. As shown in FIG. 5B, the at least partially cured first charge of composite material 52 is shown in an orientation that is substantially inverted as compared to the orientation of composite material 52 as shown in FIG. 5A. The substantially inverted orientation allows the at least partially cured charge 52 to receive a second charge of composite material onto the first charge first surface 54 as shown in FIG. 5C. However, while the first charge is shown inverted after removal from the tool, it is understood that processing protocols may not require such inversion of the cured first charge after removal from the tool, so long as a second charge may effectively be brought into contact with the first charge first surface.

According to an aspect of the present disclosure, the first charge first surface 54 is surface treated after removal from the tool and prior to receiving a second charge of composite material. Contemplated treatments, according to aspects of the disclosure, are designed to substantially eliminate any significant interference between the two charges of composite material after curing to facilitate predetermined and desired co-bonding of the first and second charges, and, for example, to prepare the first charge first surface to effect a predetermined surface quality in terms of desired and predetermined roughness/smoothness, etc. Such surface treatments include, without limitation, cleaning, removing uncured or other debris from the material surface via any desired process including, without limitation, abrasive processes, etching processes, ablative processes etc. such as, for example, and without limitation, sanding, polishing, etching, laser ablation, etc. and combinations thereof. According to a further aspect, a thickness ranging from about 1 µm to about 100 µm may be removed from the first charge first surface after removal of the first charge from the tool. In another aspect, a thickness ranging from about 10 µm to about 100 µm may be removed from the first charge first surface after removal of the first charge from the tool. Further contemplated materials for treating the first charge first surface include applying suitable amounts compounds including, without limitation, amounts of methyl ethyl ketone, isopropyl alcohol, acetone, etc. In a further aspect, it is contemplated that composite technology can be refined to a degree that a desired surface characteristic, such as roughness/smoothness can be transferred from a tool or mandrel to a charge of composite material without requiring a separate surface treatment of the cured charge after removing the at least partially cured first charge from the tool.

FIG. 5C is a side view of the first charge of at least partially cured composite material 52 (having a first charge first surface 54 and first charge second surface 55) located proximate to a second charge of composite material 62. While shown as a stack of composite material, it is understood that the second charge of composite material 62 is typically layed up on the at least partially first charge first surface 54 of the first charge 52 as a series of individual layers (not shown).

FIG. 6 is a side view of the now cured first charge 52 and now cured second charges 62 co-joined as one composite material becoming the reference standard 60. Again, together, the first charge of composite material 52 and second charge of composite material 62 make up the reference standard 60. Reference standard induced characteristic region 72 is shown proximate to the interface of the first charge of composite material 52 and second charge of composite material 62

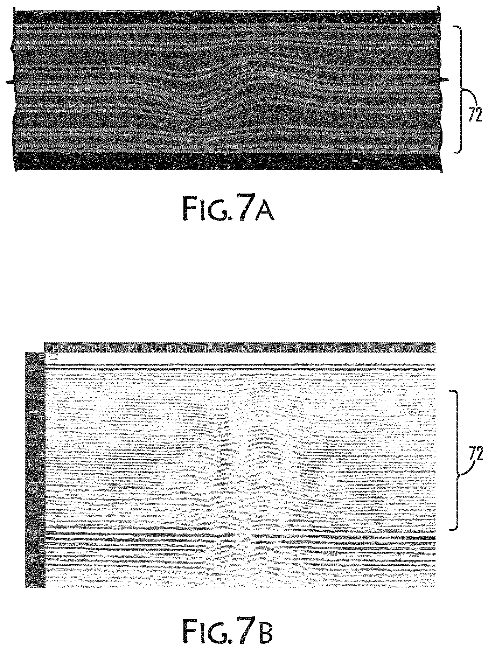

FIG. 7A is a photo micrograph of the reference standard 60, with reference standard induced characteristic region 72 depicting the interface of the first charge of composite material 52 and second charge of composite material 62.

FIG. 7B is an ultrasonic scan of the reference standard 60. Again, reference standard induced characteristic region 72 depicts the region of predetermined non-planar surface characteristics 56 (e.g. an induced wrinkle, such wrinkle induced according to aspects of the present disclosure).

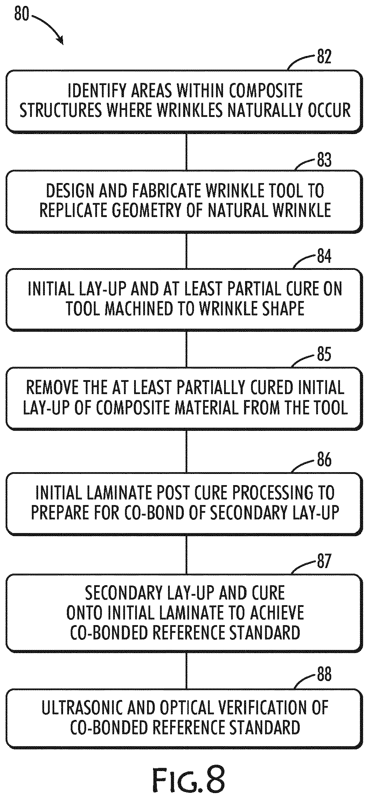

FIG. 8 is a flowchart outlining a method according to an aspect of the present disclosure. According to one aspect, a method 80 is outlined for manufacturing a wrinkle reference standard comprising identifying areas within composite structures where wrinkles occur naturally 82; designing and fabricating a tool comprising non-planar surface features replicating the geometry of a naturally occurring wrinkle 83; laying up and at least partially curing of a first charge (i.e. initial layup) of composite material on the tool 84; removing the at least partially cured first charge (i.e. initial layup) of composite material from the tool 85; conducting a first charge (i.e. initial laminate) post cure processing to prepare the first charge for co-bonding to the second charge (i.e. secondary lay-up) 86; applying a second charge (i.e. secondary lay-up) onto the first charge and cure of the second charge to achieve a co-bonded reference standard 87; and ultrasonically and optically verifying the co-bonded reference standard 88. As explained elsewhere in this specification, additional steps are contemplated to improve the co-bonding of the first charge and the second charge.

Co-bonding between the first and second charges is important, as it is desirable to achieve as imperceptible a boundary as possible between the interface of the charges after both charges have been cured. For the purposes of this disclosure, the term "as imperceptible a boundary as possible" means that the boundary was not pronounced beyond an acceptable degree. Such steps include the surface preparation of the surface of the at least partially cured first charge that was oriented proximate to the tool surface. A predetermined amount of material is removed from such surface of the at least partially cured first charge. The precise amount of material removal depends upon the post cure state of the surface, but an amount ranging from about 1 µm to about 100 µm is contemplated, followed by applying a tackifier, such as, for example Tackifier E-09 (Toray, N. Charleston, SC).

### EXAMPLE

An area was determined where wrinkles are known to occur within a composite structure used to manufacture an aircraft H-stab box. Acceptable values for the wrinkle that would remain acceptable for the structure comprising the wrinkles were determined. Photo micrographs from cut-up sections of the structure were obtained. A photo micrograph of a known wrinkle was traced into a CAD program to create a surface profile (i.e. a non-planar profile). A tool made from aluminum alloy 6061 was machined to substantially match the CAD surface profile, thus imparting the non-planar features into the tool. The wrinkle reference standard was then fabricated in a two-part co-bonding process in order to produce a predetermined design or irregular geometric configuration (i.e. "wrinkle") at known ply depth within the composite reference standard. The surface feature of the tool was brushed with a tackifier (Tackifier E-09 - Toray Composites (America) Inc., N. Charleston, SC). A first charge comprising epoxy resin-containing composite material plies, BMS 8-276 (Toray Composites (America) Inc., Tacoma, WA) were lined up along a reference edge of the wrinkle tool and swept towards the opposite side of the tool with a plastic scraper, pressing and forming the composite layers onto the surface feature of the tool. A full vacuum was applied for a minimum of two (2) minutes after the application of each ply using an intensifier to help seat the laminate onto the tool. The first charge (now comprising the wrinkle feature from the tool surface) was then inverted with the tool, with the tool compacting the laminate against the cure tool. Aluminum blocks were taped against the laminate ends to prevent the plies from extending and adversely affecting the desired wrinkle shape during curing. Curing conditions for the epoxy resin prepreg composite material were 179,444 º C (355°F) at a pressure of 620.528 kpa (90 psi). The cured composite material was then removed from the tool and the composite was inspected for resin pooling and other surface irregularities. The composite material (i.e. composite laminate) edges were smoothed and the composite material surface was treated by scuffing using a maroon scotch-brite ^{™} pad (3M, Minneapolis, MN), taking caution not to damage the plies by rounding or otherwise adversely impacting the dimension of the wrinkle ridge and features imparted into (i.e. transferred) the composite material by the tool. An estimated amount of material ranging from about 10 µm to about 100 µm was removed from the composite material surface. The composite surface was then treated and cleaned with isopropyl alcohol. The composite material was then oriented with the surface features (wrinkle-inducing features) exposed to receive a second charge of composite material onto the surface of the first charge possessing the predetermined surface features imparted on the first charge surface by the tool. In this way, the first charge of cured composite material functioned as the wrinkle tool for the layup of the second charge that would be co-bonded to the first charge. Tackifier E-09 (Toray, N. Charleston, SC) was brushed onto the first charge first surface prior to receiving the second charge of composite material thereon. The second charge was then cured at a temperature of 179,444 ºC (355°F) at a pressure of 620.528 kpa (90 psi) to complete the reference standard laminate. The edges of the reference standard were then sanded and polished. A cross-sectional photo micrograph of the reference standard was then taken to optically measure the created wrinkle in the reference standard. FIG. 7A is a drawn representation of the cross-sectional photo micrograph of the reference standard showing the internal wrinkle. The reference standard was then ultrasonically scanned to confirm that the region where the second charge of composite material joined the first charge of composite material (i.e. the composite material "interface") was not pronounced beyond an acceptable degree. The ultrasonic scans of composite parts were then measured against the values obtained in the reference standard. FIG. 8 is an illustration representing the cross-sectional ultrasonic scan of the reference standard made according to aspect of the methods of the present disclosure.

Collectively, the contemplated materials suitable for use according to aspects of the present disclosure include, without limitation, dry fiber layers and prepreg materials. For the purposes of the present disclosure, such materials are referred to equivalently as "composite materials".

According to the present specification, the curing of the first and second charges can take place under substantially ambient temperatures, or at elevated temperatures, as desired. "Substantially ambient temperature" is defined herein as room temperature, and is therefore understood to be a temperature ranging from about 15,5556 ºC to about 37.7778 ºC (60°F to about 100°F) . Further, according to the present specification "substantially ambient pressure" is defined as a naturally occurring pressure due to natural atmospheric conditions, varying accordingly to deviation from sea level and therefore having a value ranging from about 96,5266 kpa to about 110.316 kpa (14 psi to about 16 psi). When an elevated cure temperature is desired, such elevated curing temperature may be achieved in an oven or autoclave, with such curing temperatures ranging from about 37.7778 ºC to about 204.444 ºC (100°F to about 400°F) and at commensurate pressures ranging from about 96,5266 kpa to about 620.528 kpa (14 psi to about 90 psi) .

It is understood that the first charge is cured to a degree that effects a predetermined and desired dimensional stability to the first charge relative to many factors including, without limitation, the overall predetermined and desired dimension of the first charge, the predetermined and desired dimension of the first charge relative to the second charge upon curing of the second charge, as well as the predetermined and desired dimension of the induced features (e.g. wrinkles) in the first and second charges. As a result, the first charge may be fully cured, or may be cured, as desired to any state of at least partial cure prior to presenting the second charge to the first charge.

Further useful composite materials of the present disclosure are understood to comprise composite prepregs comprising a fiber component and an epoxy resin-containing component. Contemplated fibers for use in the composite prepreg include, without limitation, carbon fibers, glass fibers, aramid fibers, boron fibers, etc., and combinations thereof. Ideal prepreg candidate materials are fully impregnated materials where a resin substantially completely filling the fiber bed.

Contemplated epoxy resin-based compounds include, without limitation, digylcidyl ethers of bisphenol A; dicgycidyl ethers of bisphenol F; N,N,N',N'-tetragylcidyl-4,4'-diaminophenylmethane; p-amino phenol triglycidyl ether; epoxy phenol novolac resins; epoxy cresol novolac resins; 1,3,5-triglycidyl isocyanurate; tris(2,3-epoxypropyl)isocyanurate (and isocyanurates); glycerol diglycidyl ether; trimethylolpropane triglycidyl ether, or combinations thereof.

The variations and alternatives of the present disclosure relate to the manufacture and use of reference standards used in the manufacture, maintenance, inspection, etc. of composite components and parts such as, for example, composite component parts of any dimension, including the manufacture and use of components and parts in the fabrication of larger parts and structures. Such larger parts and structures include, but are not limited to, components and parts designed to be positioned on the exterior or interior of stationary objects including, without limitation, bridge trusses, support columns, general construction objects, etc. Further objects include, without limitation, vehicles including, without limitation, atmospheric and aerospace vehicles and other objects, and structures designed for use in space or other upper-atmosphere environments such as, for example, manned or unmanned vehicles and objects. Further, contemplated objects include, but are not limited to vehicles such as, for example, aircraft, spacecraft, satellites, rockets, missiles, etc. and therefore include manned and unmanned aircraft, drones, spacecraft, terrestrial vehicles, non-terrestrial vehicles, and therefore include manned and unmanned surface and sub-surface water-borne vehicles and objects.

## Claims

1. A method (80) of manufacturing an inspection reference standard (60) comprising:
positioning a tool (30), said tool comprising a tool first surface (31), said tool first surface comprising a non-planar characteristic (32);
applying a first charge (52) to the tool first surface;
at least partially curing the first charge, said first charge comprising a first charge first surface (54) and a first charge second surface (55), said first charge first surface positioned proximate to the tool first surface;
removing the first charge from the tool;
applying a second charge (62) to the first charge first surface; and
at least partially curing the second charge.

2. The method of Claim 1, wherein, after the step of at least partially curing the first charge, comprising:
imparting a predetermined non-planar characteristic (56) to the first charge first surface.

3. The method of any one of Claims 1-2, wherein, after applying a second charge to the first charge first surface, imparting a predetermined non-planar characteristic (72) from the first charge first surface to the second charge.

4. The method of any one of Claims 1-3, wherein, before the step of positioning a tool, said tool comprising a tool first surface, said tool first surface comprising a non-planar characteristic, comprising:
imparting a predetermined non-planar characteristic (32) onto a tool first surface.

5. The method of any one of Claims 1-4, wherein, in the step of at least partially curing the first charge, further comprising:
substantially fully curing the first charge.

6. The method of any one of Claims 1-5, wherein, in the step of at least partially curing the second charge, further comprising:
substantially fully curing the second charge.

7. The method of any one of Claims 1-6, wherein, before the step of applying a second charge to the first charge first surface, comprising:
treating the first charge first surface.

8. The method of Claim 7, wherein, the step of treating the first charge first surface comprises:
removing a predetermined amount of material from the first charge first surface.

9. The method of Claim 8, wherein, the step of removing a predetermined amount of material comprises:
removing a layer of material from the first charge first surface, said layer of material ranging from about 10 µm to about 100 µm.

10. The method of any one of Claims 1-9, wherein, in the step of applying a first charge to the tool first surface, the first charge comprises a composite material.

11. The method of any one of Claims 1-10, wherein, in the step of applying a second charge to the first charge first surface, the second charge comprises a composite material.

12. The method of any one of Claims 1-11, wherein, in the step of applying a first charge to the tool first surface, the first charge comprises a prepreg material.

13. The method of any one of Claims 1-12, wherein, in the step of applying a first charge to the tool first surface, the first charge comprises a plurality of prepreg layers.

14. The method of any one of Claims 1-13, wherein, in the step of applying a second charge to the first charge first surface, the second charge comprises a prepreg material.

15. The method of any one of Claims 1-14, wherein, in the step of applying a second charge to the first charge first surface, the second charge comprises a plurality of prepreg layers.

## Patentansprüche

1. Verfahren (80) zur Herstellung eines Prüfungsreferenzstandards (60), wobei das Verfahren Folgendes umfasst:
Positionieren eines Werkzeugs (30), wobei das Werkzeug eine erste Oberfläche (31) des Werkzeugs umfasst, wobei die erste Oberfläche des Werkzeugs eine nicht ebene Eigenschaft (32) umfasst;
Aufbringen einer ersten Ladung (52) auf die erste Oberfläche des Werkzeugs;
wenigstens teilweises Aushärten der ersten Ladung, wobei die erste Ladung eine erste Oberfläche (54) der ersten Ladung und eine zweite Oberfläche (55) der ersten Ladung umfasst, wobei die erste Oberfläche der ersten Ladung nahe der ersten Oberfläche des Werkzeugs positioniert ist;
Entfernen der ersten Ladung von dem Werkzeug;
Aufbringen einer zweiten Ladung (62) auf die erste Oberfläche der ersten Ladung; und
wenigstens teilweises Aushärten der zweiten Ladung.

2. Verfahren nach Anspruch 1, das nach dem Schritt des wenigstens teilweisen Aushärtens der ersten Ladung Folgendes umfasst:
Verleihen einer vorbestimmten nicht ebenen Eigenschaft (56) an die erste Oberfläche der ersten Ladung.

3. Verfahren nach einem der Ansprüche 1 und 2, das nach dem Aufbringen einer zweiten Ladung auf die erste Oberfläche der ersten Ladung Folgendes umfasst:
Verleihen einer vorbestimmten nicht ebenen Eigenschaft (72) von der ersten Oberfläche der ersten Ladung an die zweite Ladung.

4. Verfahren nach einem der Ansprüche 1 bis 3, das vor dem Schritt des Positionierens eines Werkzeugs, das eine erste Oberfläche des Werkzeugs umfasst, die eine nicht ebene Eigenschaft umfasst, Folgendes umfasst:
Verleihen einer vorbestimmten nicht ebenen Eigenschaft (32) auf eine erste Oberfläche des Werkzeugs.

5. Verfahren nach einem der Ansprüche 1 bis 4, das in dem Schritt des wenigstens teilweisen Aushärtens der ersten Ladung Folgendes umfasst:
im Wesentlichen vollständiges Aushärten der ersten Ladung.

6. Verfahren nach einem der Ansprüche 1 bis 5, das in dem Schritt des wenigstens teilweisen Aushärtens der zweiten Ladung Folgendes umfasst:
im Wesentlichen vollständiges Aushärten der zweiten Ladung.

7. Verfahren nach einem der Ansprüche 1 bis 6, das vor dem Schritt des Aufbringens einer zweiten Ladung auf die erste Oberfläche der ersten Ladung Folgendes umfasst:
Behandeln der ersten Oberfläche der ersten Ladung.

8. Verfahren nach Anspruch 7, wobei der Schritt des Behandelns der ersten Oberfläche der ersten Ladung Folgendes umfasst:
Entfernen einer vorbestimmten Menge an Material von der ersten Oberfläche der ersten Ladung.

9. Verfahren nach Anspruch 8, wobei der Schritt des Entfernens einer vorbestimmten Menge an Material Folgendes umfasst:
Entfernen einer Materialschicht von der ersten Oberfläche der ersten Ladung, wobei die Materialschicht im Bereich von etwa 10 µm bis etwa 100 µm liegt.

10. Verfahren nach einem der Ansprüche 1 bis 9, wobei in dem Schritt des Aufbringens einer ersten Ladung auf die erste Oberfläche des Werkzeugs die erste Ladung ein Verbundmaterial umfasst.

11. Verfahren nach einem der Ansprüche 1 bis 10, wobei in dem Schritt des Aufbringens einer zweiten Ladung auf die erste Oberfläche der ersten Ladung die zweite Ladung ein Verbundmaterial umfasst.

12. Verfahren nach einem der Ansprüche 1 bis 11, wobei in dem Schritt des Aufbringens einer ersten Ladung auf die erste Oberfläche des Werkzeugs die erste Ladung ein Prepreg-Material umfasst.

13. Verfahren nach einem der Ansprüche 1 bis 12, wobei in dem Schritt des Aufbringens einer ersten Ladung auf die erste Oberfläche des Werkzeugs die erste Ladung eine Vielzahl von Pregreg-Schichten umfasst.

14. Verfahren nach einem der Ansprüche 1 bis 13, wobei in dem Schritt des Aufbringens einer zweiten Ladung auf die erste Oberfläche der ersten Ladung die zweite Ladung ein Prepreg-Material umfasst.

15. Verfahren nach einem der Ansprüche 1 bis 14, wobei in dem Schritt des Aufbringens einer zweiten Ladung auf die erste Oberfläche der ersten Ladung die zweite Ladung eine Vielzahl von Pregreg-Schichten umfasst.

## Revendications

1. Procédé (80) de fabrication d'un étalon de référence d'inspection (60), comprenant :
la mise en place d'un outil (30), ledit outil comprenant une première surface d'outil (31), ladite première surface d'outil comprenant une caractéristique non plane (32) ;
l'application d'une première charge (52) sur la première surface d'outil ;
la cuisson au moins partielle de la première charge, ladite première charge comprenant une première surface de première charge (54) et une deuxième surface de première charge (55), ladite première surface de première charge étant placée à proximité de la première surface d'outil ;
le retrait de la première charge de l'outil ;
l'application d'une deuxième charge (62) sur la première surface de première charge ; et
la cuisson au moins partielle de la deuxième charge.

2. Procédé selon la revendication 1, comprenant, après l'étape de cuisson au moins partielle de la première charge, l'étape consistant à :
conférer une caractéristique non plane prédéterminée (56) à la première surface de première charge.

3. Procédé selon l'une quelconque des revendications 1 et 2, comprenant, après l'application d'une deuxième charge sur la première surface de première charge, l'étape consistant à :
conférer une caractéristique non plane prédéterminée (72) de la première surface de première charge à la deuxième charge.

4. Procédé selon l'une quelconque des revendications 1 à 3, comprenant, avant l'étape de mise en place d'un outil comprenant une première surface d'outil comprenant une caractéristique non plane, l'étape consistant à :
conférer une caractéristique non plane prédéterminée (32) sur une première surface d'outil.

5. Procédé selon l'une quelconque des revendications 1 à 4, comprenant en outre, dans le cadre de l'étape de cuisson au moins partielle de la première charge :
la cuisson sensiblement totale de la première charge.

6. Procédé selon l'une quelconque des revendications 1 à 5, comprenant en outre, dans le cadre de l'étape de cuisson au moins partielle de la deuxième charge :
la cuisson sensiblement totale de la deuxième charge.

7. Procédé selon l'une quelconque des revendications 1 à 6, comprenant, avant l'étape d'application d'une deuxième charge sur la première surface de première charge :
le traitement de la première surface de première charge.

8. Procédé selon la revendication 7, dans lequel l'étape de traitement de la première surface de première charge comprend :
le retrait d'une quantité prédéterminée de matériau de la première surface de première charge.

9. Procédé selon la revendication 8, dans lequel l'étape de retrait d'une quantité prédéterminée de matériau comprend :
le retrait d'une couche de matériau de la première surface de première charge, ladite couche de matériau faisant d'environ 10 µm à environ 100 µm.

10. Procédé selon l'une quelconque des revendications 1 à 9, dans lequel, dans le cadre de l'étape d'application d'une première charge sur la première surface d'outil, la première charge comprend un matériau composite.

11. Procédé selon l'une quelconque des revendications 1 à 10, dans lequel, dans le cadre de l'étape d'application d'une deuxième charge sur la première surface de première charge, la deuxième charge comprend un matériau composite.

12. Procédé selon l'une quelconque des revendications 1 à 11, dans lequel, dans le cadre de l'étape d'application d'une première charge sur la première surface d'outil, la première charge comprend un matériau préimprégné.

13. Procédé selon l'une quelconque des revendications 1 à 12, dans lequel, dans le cadre de l'étape d'application d'une première charge sur la première surface d'outil, la première charge comprend une pluralité de couches de préimprégné.

14. Procédé selon l'une quelconque des revendications 1 à 13, dans lequel, dans le cadre de l'étape d'application d'une deuxième charge sur la première surface de première charge, la deuxième charge comprend un matériau préimprégné.

15. Procédé selon l'une quelconque des revendications 1 à 14, dans lequel, dans le cadre de l'étape d'application d'une deuxième charge sur la première surface de première charge, la deuxième charge comprend une pluralité de couches de préimprégné.
